# EUROPÄISCHE PATENTSCHRIFT

(11) **EP 1 325 565 B1**
(45) Veröffentlichungstag und Bekanntmachung des Hinweises auf die Patenterteilung: **03.12.2008**
(21) Anmeldenummer: 01976275.6
(22) Anmeldetag: 05.10.2001
(51) Int. Cl.: H04B 7/005

(54) **VERFAHREN UND ANORDNUNG ZUR INITIIERUNG EINER KOMMUNIKATION**
METHOD AND SYSTEM FOR INITIATING A COMMUNICATION
PROCEDE ET DISPOSITIF POUR LANCER UNE COMMUNICATION

(30) Priorität: 10.10.2000 EP 00122013
(43) Veröffentlichungstag der Anmeldung: 09.07.2003
(60) Teilanmeldung: 08014163.3
(73) Patentinhaber: SIEMENS AKTIENGESELLSCHAFT, 80333 München (DE)
(72) Erfinder: RAAF, Bernhard, 81475 München (DE)
(86) Internationale Anmeldenummer: PCT/EP2001/011530
(87) Internationale Veröffentlichungsnummer: WO 2002/032010

(56) Entgegenhaltungen:
- EP-A- 0 917 304
- US-A- 5 465 399
- ETSI TS 125.214 V3.4.0 (2000-09) Universal Mobile Telecommunications System (UMTS); Physical layer procedures (FDD) (Release 1999), pages 1-47 XP002166612 in der Anmeldung erwähnt

## Beschreibung

Die Erfindung betrifft ein Verfahren und eine Anordnung zur Initiierung einer Kommunikation, insbesondere einer Kommunikationsverbindung. Insbesondere betrifft die Erfindung die Initiierung der Leistungsregelung bzw. ein Verfahren und eine Anordnung zur Leistungssteuerung.

Im Rahmen von Mobilkommunikationssystemen ist es bekannt, die Initiierung bzw. Einleitung einer Kommunikation durch das Senden eines Initiationssignals von einer Mobilstation, wie beispielsweise einem Mobiltelefon (auch User Equipment UE genannt), an eine Basisstation (auch Node B genannt )zu starten. Bei dem Initiationssignal kann es sich um eine sogenannte RACH (Random Access Channel) Nachricht oder um eine Präambel, d.h. eine spezifische Nachricht vor einer möglichen RACH Nachricht, handeln.

Ein besonders wichtiges Element von CDMA (Code Division Multiple Access)-Systemen, wie beispielsweise dem UMTS (Universal Mobile Telecommunications System), bildet die Leistungsregelung. Das hierbei für die Übertragung von Daten verwendete closed-loop power control Verfahren kann für die initiierende RACH-Übertragung nicht verwendet werden, da es nicht vor dem Beginn der Übertragung durchgeführt werden kann. Daher wird für die initiierende RACH-Übertragung ein sogenanntes open loop power control Verfahren verwendet. Da es mit diesem Verfahren nicht möglich ist, die ideale Uplink-Leistung (Leistung eines Signals, das von der Mobilstation zur Basisstation gesendet wird, und an der Basisstation mit der für einen Empfang erforderlichen Leistung ankommt) mit hoher Genauigkeit zu ermitteln, wird zusätzlich ein sogenanntes power ramping Verfahren eingesetzt, bei dem RACH Nachrichten mit ansteigender Leistung wiederholt von der Mobilstation gesendet werden. Wenn die Leistung der gesendeten RACH Nachricht zu gering ist, wird die Nachricht nicht von der Basisstation empfangen und keine Bestätigungsnachricht von der Basisstation an die Mobilstation übermittelt und die Übertragung der RACH Nachricht von der Mobilstation an die Basisstation mit größerer Leistung wiederholt. Wenn die Leistung der RACH Nachricht groß genug ist, wird die Nachricht von der Basisstation empfangen und eine Bestätigungsnachricht von der Basisstation an die Mobilstation übermittelt. Anstatt einer vollständigen RACH Nachricht kann auch nur ein verkürztes Signal, eine sog. Präambel gesendet werden.

Ein derartiges Verfahren ist beispielsweise bekannt aus EP 0917304 A2. Dabei wird die Übertragung eines initiierenden Signals ausgehend von einer ermittelten Anfangsleistung solange mit steigender Leistung wiederholt bis entweder eine Bestätigungsnachricht empfangen wird oder die Anzahl der Wiederholungen einen Schwellwert überschreitet. Wenn eine Bestätigungsnachricht empfangen wird, wird mit der Übertragung von Daten fortgefahren. Wenn die Anzahl der Wiederholungen einen Schwellwert überschreitet, wird das Verfahren wieder mit der Übertragung eines initiierenden Signals mit einer Anfangsleistung begonnen.

Ein weiterentwickeltes Verfahren dieser Art ist bekannt aus "ETSI TS 125.214, V3.4.0-DRAFT (2000-09), UMTS, Physical layer procedures (FDD), (Release 1999)". Hierbei ist insbesondere in Kapitel 6.1 die sogenannte Random Access Procedure beschrieben, welche allgemein die Initiierung der Kommunikation, und insbesondere in den Schritten 4 bis 7 und 9 bis 10 die Initiierung der Leistungsregelung beschreibt. Hierbei wird die initiierende Nachricht, welche von der Mobilstation zur Basisstation gesendet wird, Präambel genannt. Im folgenden wird dieses Verfahren kurz erläutert, wobei zur Vereinfachung die Schritte nicht aufgeführt sind, welche zum Verständnis des Leistungsregelungsverfahrens nicht erforderlich sind; insbesondere wird auf die Zuordnung von verschiedenen slots (Zeitschlitzen) bzw. Kanälen zu verschiedenen Mobilstationen nicht näher eingegangen.

In Schritt 4 des in 6.1 beschriebenen Verfahrens wird ein Zähler zur Zählung der Wiederholungen der Übertragung der Präambel auf den Wert Preamble_Retrans_Max gesetzt.

In Schritt 5 wird die Leistung für die Übertragung der Präambel auf den Wert Preamble_Initial_Power (Anfangsleistung) gesetzt.

In Schritt 6 wird eine Präambel mit der Leistung preamble transmission power in einem access Zeitschlitz von der Mobilstation an die Basisstation gesendet.

Wird in Schritt 7 mobilstationsseitig keine Bestätigungsnachricht (weder eine positive Bestätigungsnachricht ("positive acquisition indicator") noch eine negative Bestätigungsnachricht ("negative acquisition indicator")) detektiert, so wird in Schritt 7.3 die Leistung zum Senden der Präambel um ΔP₀ = Power_Ramp_Step [dB] erhöht.

In Schritt 7.4 wird der Zähler zur Zählung der Wiederholungen der Übertragung der Präambel um eins reduziert.

Wenn in Schritt 7.5 der Zähler zur Zählung der Wiederholungen der Übertragung der Präambel > 0 ist, so wird bei Schritt 6 fortgefahren, andernfalls wird festgestellt, dass keine Bestätigungsnachricht empfangen wurde und die Prozedur verlassen.

Falls eine negative Bestätigungsnachricht empfangen wird, wird die Prozedur in Schritt 8 verlassen.

In Schritt 9 wird - für den Fall, dass eine positive Bestätigungsnachricht ("positive acquisition indicator") empfangen wurde - eine Random Access Nachricht an die Basisstation gesendet.

In Schritt 10 wird festgestellt, dass die Random Access Nachricht übertragen wurde.

Allerdings ist in der Praxis die Leistung, mit der eine Mobilstation innerhalb eines Mobilfunksystems senden darf, durch eine maximale Leistung begrenzt, deren Überschreitung zu einer Verschlechterung der Übertragungsqualität beispielsweise aufgrund verschlechterter Phasengenauigkeit oder Modulationsgenauigkeit führen kann. Auch kann die Leistung von Zelle zu Zelle zur Verringerung von Interferenzen unterschiedlich begrenzt sein. Des weiteren kann die Maximalleistung einer Mobilstation durch Regulierungsvorschriften oder durch einen anzuwendenden Standard begrenzt sein. Außerdem sind Mobilstationen nicht in der Lage mit einer beliebig geringen Leistung zu senden. Daher werden in Mobilfunkstandards minimale Leistungen festegelegt, mit denen eine Mobilstation senden können muss.

Der Erfindung liegt nun auch die Aufgabe zugrunde, ein Verfahren und eine Anordnung zur Initiierung einer Kommunikation, insbesondere ein Verfahren und eine Anordnung zur Leistungssteuerung, anzugeben, durch welche die - in der Praxis gegebenen - Einschränkungen hinsichtlich der Sendeleistung von Mobilstationen derart berücksichtigt werden, dass gegenüber dem Stand der Technik weniger Energie verbraucht wird bzw. weniger Interferenzen im Mobilfunksystem verursacht werden.

Diese Aufgabe wird durch die Merkmale der unabhängigen Ansprüche gelöst. Vorteilhafte und zweckmäßige Weiterbildungen ergeben sich aus den abhängigen Ansprüchen.

Die Erfindung basiert demnach insbesondere auf dem Gedanken, ein stufenweises Erhöhen der Leistung (Power-Ramping), mit der eine Präambel gesendet wird, wobei die Leistung durch zumindest einen Extremwert begrenzt ist, derart durchzuführen, dass das Senden mit einer Leistung, die dem Extremwert entspricht, wiederholt durchgeführt wird.

Eine Wiederholung mit gleicher Leistung ist vorteilhaft, da es neben dem Senden der Präambel mit zu niedriger Leistung weitere zufällige oder kurzfristig bestehende Gründe dafür geben kann, dass keine Bestätigungsnachricht empfangen wird: Kollision auf dem Übertragungskanal, eine plötzliche kurzzeitige Interferenz, eine kurzzeitige hohe Dämpfung oder ein Fehler in der Übertragung der Bestätigungsnachricht, etc.

Je nach Ausführungsvariante kann es sich bei der Bestätigungsnachricht auch um eine positive und/oder negative Bestätigungsnachricht handeln, welche auch als Bestätigungssignal bezeichnet oder realisiert sein kann, das beispielsweise nur einen oder zwei verschiedene Werte annehmen kann.

Allerdings ist es nicht sinnvoll, das Senden der Präambel mit gleicher Leistung unbegrenzt zu wiederholen, da mit jeder Wiederholung die Wahrscheinlichkeit dafür größer wird, dass der Grund dafür, dass keine Bestätigungsnachricht empfangen wird, in der zu geringen Leistung der Präambel liegt. Daher sehen Weiterbildungen der Erfindung vor, das wiederholte Senden der Präambel mit der gleichen Leistung nach einer bestimmten Anzahl von Wiederholungen oder nach dem Eintritt einer anderen Bedingung zu beenden.

Der maximale Extremwert kann dabei beispielsweise durch den Standard des Mobilfunksystems, in dessen Rahmen die Erfindung eingesetzt wird, festgelegt sein.

Der minimale Extremwert kann dabei beispielsweise auch durch den Standard des Mobilfunksystems, in dessen Rahmen die Erfindung eingesetzt wird, festgelegt sein, oder durch einen von einem Hersteller der Mobilstation festgelegten Wert, der beispielsweise der minimalen von der Mobilstation realisierbaren Sendeleistung entspricht (das Mobilfunksystem kann beispielsweise einen Wert einer minimalen Sendeleistung festlegen, den eine Mobilstation mindestens erreichen können muss; die Mobilstation darf aber auch in der Lage sein, mit niedrigerer Sendeleistungen zu senden).

Im Rahmen der Erfindung können Formulierungen wie "außerhalb einer Begrenzung", "innerhalb einer Begrenzung", "zwischen einer Begrenzung", "größer als", "kleiner als" je nach Ausführungsvariante bedeuten, dass die entsprechende Grenze zu dem entsprechenden Intervall gehört, oder dass die entsprechende Grenze nicht zu dem entsprechenden Intervall gehört.

Eine Ausführungsvariante sieht vor, dass die erste Berechnung der Idealleistung, also der Anfangsleistung, bei der ein Inkrementieren wegen eines fehlenden vorhergehenden Bezugswertes nicht möglich ist, durch eine sogenannte open loop power control ersetzt wird. Dabei wird von der Mobilstation ermittelt, mit welcher Leistung von der Basisstation gesendete Signale bei der Mobilstation ankommen, und daraus abgeschätzt mit welcher Leistung die Mobilstation eine Präambel zu senden hat. Die erste berechnete Leistung entspricht dann dieser ermittelten Anfangsleistung.

Zur Lösung der Aufgabe ist auch eine Anordnung vorgesehen, welche eine Steuereinrichtung aufweist, die zur Durchführung der Verfahren und zur Durchführung entsprechender Weiterbildungen eingerichtet ist.

Die Erfindung wird im Folgenden anhand bevorzugter Ausführungsbeispiele näher beschrieben, zu deren Erläuterung nachstehend aufgelistete Figuren dienen:
Figur 1 Blockschaltbild einer Mobilstation;
Figur 2 vereinfachtes Ablaufdiagramm eines Verfahrens zur Initiierung einer Kommunikation.

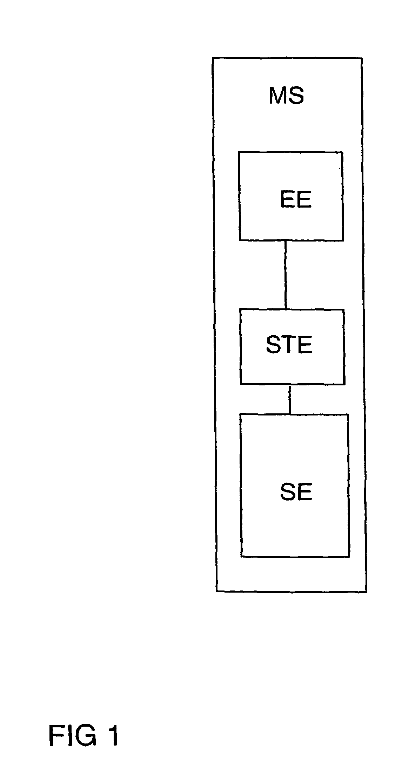

Figur 1 zeigt eine Mobilstation MS, wie beispielsweise ein UMTS-Mobiltelefon, mit einer Sendeinrichtung SE zum Senden einer Präambel und zum Senden von Steuerdaten und Nutzdaten und mit einer Empfangseinrichtung EE zum Empfangen einer Bestätigungsnachricht und zum Empfangen von Steuerdaten und Nutzdaten.

Die Empfangseinrichtung und die Sendeeinrichtung werden gesteuert durch eine Steuereinrichtung STE, welche einen programmtechnisch geeignet eingerichteten Mikrocontroller oder entsprechende geeignete Schaltungen enthalten kann.

Auf die detaillierte Realisierung der Mobilstation wird an dieser Stelle nicht näher eingegangen, da eine Mobilstation als solche dem Fachmann bekannt ist, und eine Einrichtung der Steuereinrichtung zur Durchführung der im Rahmen der Erfindung liegenden Verfahren bei Kenntnis der vorliegenden Anmeldung im Rahmen des fachmännischen Handelns liegt.

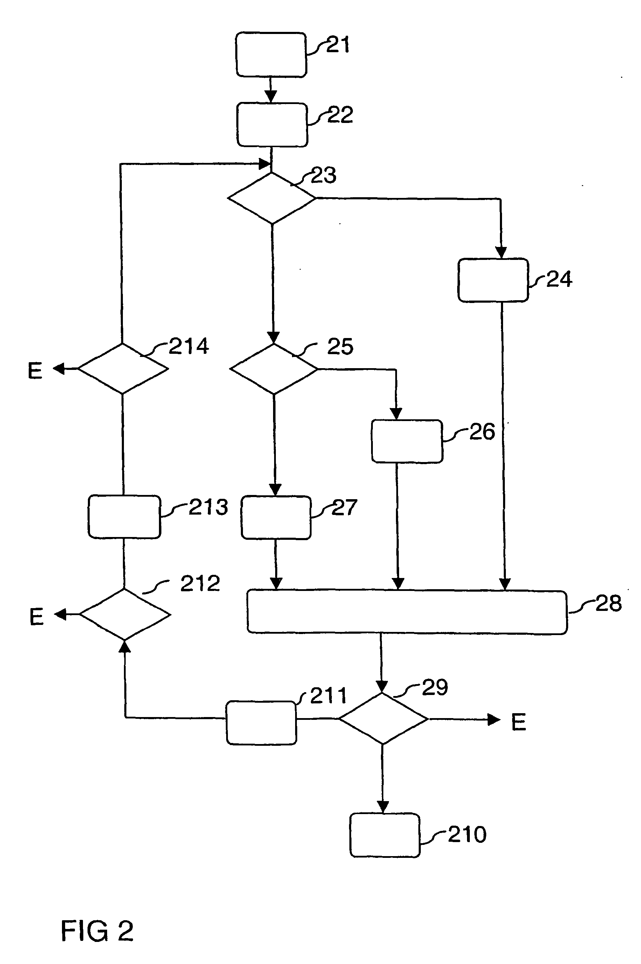

Figur 2 beschreibt die Initiierung einer Kommunikation zwischen Basisstation und Mobilstation, welche mit einer Abschätzung (open loop power control) der Anfangsleistung einer von der Mobilstation zu sendenden Präambel beginnt. Anschließend wird ein stufenweises Steigern der Leistung der Präambel (power ramping) durchgeführt bis eine Basisstation die Präambel empfängt bzw. detektiert und eine entsprechende Bestätigungsnachricht an die Mobilstation sendet, und diese die Bestätigungsnachricht empfängt bzw. detektiert. Wird eine Bestätigungsnachricht empfangen, so wird das Verfahren durch das Senden einer RACH-Nachricht fortgesetzt. Als Abbruch-Kriterien für das stufenweise Steigern der Leistung der Präambel dient das Über- bzw. Unterschreiten eines Zählerschwellwertes bzw. das Überschreiten einer maximalen Extremleistung um einen Schwellwert durch eine berechnete Idealleistung zum Senden der Präambel. In Klammern wird dabei eine zweite Nummerierung angegeben, um den Bezug und Unterschied des Verfahrens gegenüber dem eingangs angegebenen im ETSI-Dokument zu verdeutlichen.

In Schritt 21 (Schritt 4)des in Figur 2 dargestellten Verfahrens wird ein Zähler zur Zählung der Wiederholungen der Übertragung der Präambel auf den Wert "Preamble Retrans Max" gesetzt.

In Schritt 22 (Schritt 5) wird die berechnete Idealleistung (befohlene Leistung) der Präambel auf den Wert Preamble_Initial_Power (Anfangsleistung) gesetzt, welcher durch ein open loop power conrol Verfahren ermittelt wird.

In Schritt 23 (Ergänzung zu Schritt 6) wird die berechnete Idealleistung mit einer maximal erlaubten Leistung (maximale Extremleistung) verglichen. Ist die berechnete Idealleistung größer als die maximal erlaubte Leistung, so wird die Leistung der Präambel in Schritt 24 auf die maximal erlaubte Leistung gesetzt und die Präambel in Schritt 28 mit dieser Leistung gesendet.

Ist die berechnete Idealleistung kleiner als die maximal erlaubte Leistung oder gleich der maximal erlaubten Leistung, so wird in Schritt 25 die berechnete Idealleistung mit einer - beispielsweise durch den Standard eines Mobilfunksystems oder durch einen Mobilfunksystembetreiber oder durch einen Hersteller - festgelegten minimalen Leistung (minimale Extremleistung) verglichen. Ist die berechnete Idealleistung kleiner als die festgelegte minimale Leistung, so wird die Leistung der Präambel in Schritt 26 auf einen Wert gesetzt, der zwischen der berechneten Idealleistung und der minimalen Leistung liegt, und die Präambel in Schritt 28 mit dieser Leistung gesendet. Dies ist insbesondere dann vorteilhaft, wenn die Mobilstation in der Lage ist, mit einer Leistung zu senden, die geringer ist, als die vorgeschriebene minimale Leistung. Eine Folge dieses Schrittes kann sein, dass mehrmals mit der gleichen Leistung, die zwischen der berechneten Idealleistung und der minimalen Leistung liegt, gesendet wird, je nachdem, wie weit die durch die open loop power control ermittelte Preamble_Initial_Power (Anfangsleistung) unter der festgelegten minimalen Leistung liegt. Wenn die o-pen loop power control eine niedrige Anfangsleistung für die Präambel abschätzt, so weist dies darauf hin, dass mit hoher Wahrscheinlichkeit eine mit dieser Anfangsleistung gesendete Präambel von einer Basisstation empfangbar sein sollte; allerdings könnte ein erfolgloses Senden (kein Empfang einer Bestätigungsnachricht) einer Präambel auch durch eine Kollision auf dem Übertragungskanal, eine plötzliche kurzzeitige Interferenz, eine kurzzeitige hohe Dämpfung oder einen Fehler in der Übertragung der Bestätigungsnachricht begründet sein. Daher ist dieses wiederholte Senden der Präambel mit der gleichen niedrigen Leistung sinnvoll.

Ist die berechnete Idealleistung kleiner als die maximal erlaubte Leistung oder gleich der maximal erlaubten Leistung und größer als die festgelegte minimale Leistung oder gleich der festgelegten minimalen Leistung, so wird in Schritt 27 die Leistung der Präambel auf den Wert der berechneten Idealleistung gesetzt, und die Präambel in Schritt 28 mit dieser Leistung gesendet.

In den Schritten 23 bis 28 (Schritt 6) wird also eine Präambel mit berechneter Idealleistung in einem access Zeitschlitz von der Mobilstation an die Basisstation gesendet; falls dabei die berechnete Idealleistung (befohlene Leistung) der Präambel die maximal erlaubte Leistung überschreitet, so sendet die Mobilstation mit der maximal erlaubten Leistung; falls dabei die berechnete Idealleistung (befohlene Leistung) der Präambel eine festgelegte minimale Leistung unterschreitet, so sendet die Mobilstation mit einer Leistung, die zwischen der berechneten Idealleistung (befohlene Leistung) der Präambel und der festgelegten minimalen Leistung liegt.

In Schritt 29 wird eine bestimmte Zeitdauer, die beispielsweise durch einen Timerablauf ermittelt werden kann, auf den Empfang einer Bestätigungsnachricht gewartet.

Wird in dieser Zeitdauer keine Bestätigungsnachricht, auch "acquisition indicator" genannt, empfangen (Schritt 7.1), so wird in Schritt 211 (Schritt 7.3) die Idealleistung durch ein Inkrementieren der zuletzt berechneten Idealleistung um ΔP₀ = Power Ramp Step [dB] neu berechnet. In Schritt 212 wird überprüft, ob die neu berechnete Idealleistung (befohlene Leistung) die maximal erlaubte Leistung um zumindest einen vorgegebenen Schwellwert, beispielsweise um zumindest 6 dB überschreitet. Ist dies der Fall, so wird festgestellt, dass keine Bestätigungsnachricht empfangen wurde und die Prozedur verlassen E. Eine Ausführungsvariante sieht vor, dass auch für diesen Fall (Überschreiten um zumindest einen vorgegebenen Schwellwert, wie beispielsweise 6 dB) das Verfahren in Schritt 212 fortgesetzt wird.

Überschreitet in Schritt 212 die neu berechnete Idealleistung die maximal erlaubte Leistung nicht um zumindest den vorgegebenen Schwellwert, beispielsweise um zumindest 6 dB, so wird in Schritt 213 (Schritt 7.4) der Zähler zur Zählung der Wiederholungen der Übertragung der Präambel um eins reduziert. Wenn in Schritt 214 (Schritt 7.5) der neue Zählerstand größer Null ist, wird das Verfahren mit Schritt 23 fortgesetzt; ansonsten wird festgestellt, dass keine Bestätigungsnachricht empfangen wurde und die Prozedur verlassen E.

Wird in Schritt 29 eine positive Bestätigungsnachricht ("positive acquisition indicator") empfangen, so wird in Schritt 210 eine RACH Nachricht an eine Basisstation gesendet (Schritt 9). Wird hingegen in Schritt 29 eine negative Bestätigungsnachricht ("negative acquisition indicator") empfangen (Schritt 8), so wird die Prozedur verlassen E.

Die Leistung von Signalen einer folgenden Datenübertragung basiert dann auf der Leistung der zuletzt gesendeten Präambel, deren Empfang durch eine Bestätigungsnachricht bestätigt wurde. Die sinnvollerweise zu verwendende Leistung dieser folgenden Datenübertragung hängt dabei von ihrer Datenrate ab. Insbesondere bei hohen Datenraten kann es vorteilhaft sein, diese Leistung höher als die Leistung der zuletzt gesendeten Präambel zu wählen. In UMTS wird diese Leistungsdifferenz durch den Parameter ΔPₚ₋ₘ [dB] bezeichnet.

Eine Ausführungsvariante der Erfindung sieht vor, dass in Schritt 212 durch einen Zähler die Anzahl der wiederholten Übertragungen der Präambel mit der maximal erlaubten Leistung gezählt wird. Bei Überschreiten einer vorgegeben Anzahl wird die Prozedur verlassen. Dies kann auch dadurch realisiert werden, dass die Prozedur verlassen wird, wenn die berechnete Idealleistung eine vorgegebene Schwellenleistung Pmax überschreitet. Der Unterschied zwischen beiden Varianten liegt darin, dass eine Änderung der Inkrements der Leistung die Anzahl der Wiederholungen im zweiten Fall verändert, im ersten Fall nicht. Vorteilhaft am zweiten Fall ist, dass ein kleines Inkrement, das bevorzugt gewählt wird in Umgebungen, die eine hohe Kollisionswahrscheinlichkeit aufweisen, zu vielen Wiederholungen führt, die gerade in diesen Umgebungen sinnvoll sind.

Eine andere Ausführungsvariante der Erfindung sieht vor, dass die Leistung der Präambel in Schritt 26 auf die festgelegte minimale Leistung gesetzt wird.

Eine andere Ausführungsvariante der Erfindung sieht vor, dass das wiederholte Senden der Präambel mit konstanter Leistung nach einer vorgegebenen Anzahl Nmin von Wiederholungen abgebrochen wird, und durch Inkrementieren der Leistung der zuletzt gesendeten Präambel eine neue Idealleistung berechnet wird, wenn die Leistung der zuletzt gesendeten Präambel zwischen der minimalen Extremleistung und der berechneten Idealleistung liegt. Dadurch wird verhindert, dass in vielen Wiederholungen vergeblich mit zu geringer Leistung gesendet wird, wenn beispielsweise die open loop power control einen viel zu geringen Wert als Anfangsleistung ermittelt hat. Dies kann beispielsweise dadurch realisiert sein, dass die Anfangsleistung mindestens auf einen Wert gesetzt wird, der sich berechnet aus der festgelegten minimalen Leistung minus Nmin * Inkrement. Dies führt zu Nmin Übertragungen der Präambel mit der festgelegten minimalen Leistung, gefolgt von Übertragungen mit höherer Leistung, falls keine Bestätigungsnachricht empfangen wurde.

Ferner sieht eine Ausführungsvariante der Erfindung vor, dass die Leistungsanforderungen einer der Leistungssteuerung folgenden Datenübertragung berücksichtigt wird, um die Anzahl der Wiederholungen des Sendens der Präambel zu reduzieren. Dadurch kann die power ramping Prozedur schon vorab abgebrochen werden, wenn die zur Datenübertragung erforderliche Leistung höher ist als die zum Senden der Präambel erforderliche Leistung. So gibt es Situationen, in denen die Übertragung der Präambel mit einer bestimmten Leistung erfolgreich ist, aber eine folgende Datenübertragung aufgrund bestimmter Umstände dieser Datenübertragung nur bei einer viel höheren oder viel niedrigeren Leistung sinnvoll wäre. So kann beispielsweise eine Datenübertragung mit besonders hoher Datenrate nur mit einer gegenüber der Leistung der RACH Nachricht viel höheren Leistung durchgeführt werden. Wenn dieser Umstand a priori bekannt ist, kann es sinnvoll sein die Leistung der Präambel bzw. der RACH Nachricht durch eine besonderen Maximalwert, der dies berücksichtigt, zu begrenzen. Wenn beispielsweise die Datenübertragung mit hoher Datenrate eine um 10 dB höhere Leistung als Übertragung der Präambel bzw. der RACH Nachricht erfordert, dann kann es sinnvoll sein die Leistung der Präambel bzw. der RACH Nachricht zu begrenzen durch einen Wert, der 10 dB oder 10 - x dB unter der maximal erlaubten Leistung liegt.

Neben den oben erläuterten Ausführungsvarianten der Erfindung liegt eine Vielzahl weiterer Ausführungsvarianten im Rahmen der Erfindung, welche hier nicht weiter beschrieben werden, aber anhand der erläuterten Ausführungsbeispiele einfach in die Praxis umgesetzt werden können. Insbesondere kann die Reihenfolge der Schritte in den obenerläuterten Verfahren variiert werden, Schritte hinzugefügt werden oder entfallen. Ein Beispiel für ein solches Verfahren mit variierten/hinzugefügten Schritten ist die CPCH Access Prozedur, die im Kapitel 6.2. des eingangs genannten ETSI-Dokumentes beschrieben ist. Bei Kenntnis dieser Anmeldung liegt ein Einsatz der Erfindung bei der CPCH Access Prozedur im Rahmen fachmännischen Handelns.

## Patentansprüche

1. Verfahren zur Leistungssteuerung,
- bei dem eine Idealleistung berechnet wird (22),
- bei dem eine Präambel mit der Idealleistung von der Mobilstation gesendet wird, wenn die Idealleistung innerhalb einer Begrenzung, welche durch eine maximale und eine minimale Extremleistung beschrieben ist, liegt,
- bei dem die Präambel mit der maximalen Extremleistung von der Mobilstation gesendet wird, wenn die Idealleistung über der maximalen Extremleistung liegt,
- bei dem die Präambel mit einer Leistung, die zwischen der minimalen Extremleistung und der berechneten Idealleistung liegt, von der Mobilstation gesendet wird, wenn die Idealleistung unter der minimalen Extremleistung liegt,
- bei dem ein Empfang der Präambel durch eine Basisstation durch eine Bestätigungsnachricht, welche von der Basisstation an die Mobilstation gesendet wird, bestätigt wird, und
- bei dem bei fehlender Bestätigungsnachricht durch Inkrementieren der zuletzt berechneten Idealleistung eine neue Idealleistung der Präambel berechnet wird (211).

2. Verfahren nach einem der vorhergehenden Ansprüche,
- bei dem das wiederholte Senden der Präambel mit der maximalen Extremleistung durch eine vorgegebene Anzahl von Wiederholungen begrenzt ist.

3. Verfahren nach einem der vorhergehenden Ansprüche,
- bei dem das wiederholte Senden der Präambel abgebrochen wird, wenn die berechnete Idealleistung die maximale Extremleistung um zumindest einen vorgegebenen Schwellwert überschreitet.

4. Verfahren nach einem der vorhergehenden Ansprüche,
- bei dem als initiale berechnete Idealleistung eine ermittelte Anfangsleistung verwendet wird.

5. Verfahren nach einem der vorhergehenden Ansprüche,
- bei dem die Präambel mit der minimalen Extremleistung gesendet wird, wenn die berechnete Idealleistung kleiner als die minimale Extremleistung ist.

6. Verfahren nach einem der vorhergehenden Ansprüche,
- bei dem das wiederholte Senden der Präambel mit konstanter Leistung nach einer vorgegebenen Anzahl von Wiederholungen abgebrochen wird, und durch Inkrementieren der Leistung der zuletzt gesendeten Präambel eine neue Idealleistung berechnet wird, wenn die Leistung der zuletzt gesendeten Präambel zwischen der minimalen Extremleistung und der berechneten Idealleistung liegt.

7. Verfahren nach einem der vorhergehenden Ansprüche,
- bei dem die Leistungsanforderungen einer der Leistungssteuerung folgenden Datenübertragung berücksichtigt wird, um die Anzahl der Wiederholungen des Sendens der Präambel zu reduzieren.

8. Anordnung zur Leistungssteuerung
- mit einer Sendeeinrichtung (SE) zum Senden einer Präambel
- mit einer Empfangseinrichtung (EE) zum Empfangen einer Bestätigungsnachricht, und
- mit einer Steuereinrichtung (STE) zur Steuerung der Leistung der Sendeinrichtung, welche derart eingerichtet ist,
- dass eine Präambel mit einer Anfangsleistung gesendet wird,
- dass bei fehlender Bestätigungsnachricht durch Inkrementieren eine Idealleistung der Präambel berechnet wird,
- dass eine Präambel mit der Idealleistung von der Mobilstation gesendet wird, wenn die Idealleistung innerhalb einer Begrenzung, welche durch eine maximale und eine minimale Extremleistung beschrieben ist, liegt,
- dass die Präambel mit der maximalen Extremleistung von der Mobilstation gesendet wird, wenn die Idealleistung über der maximalen Extremleistung liegt, und
- dass die Präambel mit einer Leistung, die zwischen der minimalen Extremleistung und der berechneten Idealleistung liegt, von der Mobilstation gesendet wird, wenn die Idealleistung unter der minimalen Extremleistung liegt.

9. Verfahren zur Leistungssteuerung,
- bei dem eine Präambel mit einer berechneten Idealleistung gesendet wird, wobei die Präambel mit einer Leistung, die zwischen berechneter Idealleistung und einer festgelegten minimalen Leistung liegt, gesendet wird, wenn die berechnete Idealleistung kleiner als die festgelegte minimale Leistung ist,
- bei dem eine Zugriffs-Nachricht (RACH-Nachricht) gesendet wird, wenn eine Bestätigungsnachricht empfangen wird,
- bei dem die Idealleistung durch Inkrementieren neu berechnet wird, wenn keine Bestätigungsnachricht empfangen wird.

## Claims

1. Method for controlling power
- in which an ideal power is calculated (22),
- in which a preamble is transmitted by the mobile station with the ideal power if the ideal power is inside a limitation which is described by a maximum and a minimum extreme power, respectively,
- in which the preamble is transmitted by the mobile station with the maximum extreme power, if the ideal power is above the maximum extreme power,
- in which the preamble is transmitted by the mobile station with a power which is between the minimum extreme power and the calculated ideal power if the ideal power is below the minimum extreme power,
- in which reception of the preamble by a base station is acknowledged by an acknowledgement message which is transmitted from the base station to the mobile station, and
- in which, if the acknowledgement message is lacking, a new ideal power of the preamble is calculated by incrementation of the last calculated ideal power (211).

2. Method according to one of the preceding claims,
- in which the retransmission of the preamble with the maximum extreme power is limited by a predetermined number of retransmissions.

3. Method according to one of the preceding claims,
- in which the retransmission of the preamble is aborted if the calculated ideal power exceeds the maximum extreme power by at least a predetermined threshold value.

4. Method according to one of the preceding claims,
- in which an initial power determined is used as the initial calculated ideal power.

5. Method according to one of the preceding claims,
- in which the preamble is transmitted with the minimum extreme power if the calculated ideal power is less than the minimum extreme power.

6. Method according to one of the preceding claims,
- in which the retransmission of the preamble with constant power is aborted after a predetermined number of retransmissions and a new ideal power is calculated by incrementing the power of the last preamble transmitted if the power of the last preamble transmitted is between the minimum extreme power and the calculated ideal power.

7. Method according to one of the preceding claims,
- in which the power requirements of a data transmission following the power control is taken into account in order to reduce the number of retransmissions of the preamble.

8. Arrangement for controlling power
- with a transmitting device (SE) for transmitting a preamble
- with a receiving device (EE) for receiving an acknowledgement message, and
- with a control device (STE) for controlling the power of the transmitting device, which is set up in such a manner
- that a preamble is transmitted with an initial power,
- that, if an acknowledgement message is lacking, an ideal power of the preamble is calculated by incrementation,
- that a preamble is transmitted by the mobile station with the ideal power if the ideal power is inside a limitation which is described by a maximum and a minimum extreme power, respectively,
- that the preamble is transmitted by the mobile station with the maximum extreme power if the ideal power is above the maximum extreme power, and
- that the preamble is transmitted by the mobile station with a power which is between the minimum extreme power and the calculated ideal power if the ideal power is below the minimum extreme power.

9. Method for controlling power
- in which a preamble is transmitted with a calculated ideal power, the preamble being transmitted with a power which is between the calculated ideal power and a specified minimum power if the calculated ideal power is less than the specified minimum power,
- in which an access message (RACH message) is transmitted when an acknowledgement message is received,
- in which the ideal power is recalculated by incrementation if no acknowledgement message is received.

## Revendications

1. Procédé de commande de la puissance, dans lequel
- une puissance idéale est calculée (22),
- un préambule avec la puissance idéale est émis par la station mobile si la puissance idéale se trouve dans une limite qui est décrite par une puissance extrême maximale et une puissance extrême minimale,
- le préambule avec la puissance extrême maximale est émis par la station mobile si la puissance idéale est supérieure à la puissance extrême maximale,
- le préambule avec une puissance qui est comprise entre la puissance extrême minimale et la puissance idéale calculée est émis par la station mobile si la puissance idéale est inférieure à la puissance extrême minimale,
- une réception du préambule par une station de base est confirmée par un message de confirmation qui est envoyé par la station de base à la station mobile et
- en l'absence de message de confirmation, une nouvelle puissance idéale du préambule est calculée (211) par incrémentation de la puissance idéale calculée en dernier lieu.

2. Procédé selon l'une des revendications précédentes, dans lequel l'émission répétée du préambule avec la puissance extrême maximale est limitée par un nombre prédéterminé de répétitions.

3. Procédé selon l'une des revendications précédentes, dans lequel l'émission répétée du préambule est interrompue si la puissance idéale calculée dépasse la puissance extrême maximale d'au moins une valeur seuil prédéterminée.

4. Procédé selon l'une des revendications précédentes, dans lequel est utilisée, en tant que puissance idéale initiale calculée, une puissance de départ qui a été déterminée.

5. Procédé selon l'une des revendications précédentes, dans lequel le préambule avec la puissance extrême minimale est émis si la puissance idéale calculée est inférieure à la puissance extrême minimale.

6. Procédé selon l'une des revendications précédentes, dans lequel l'émission répétée du préambule avec une puissance constante est interrompue après un nombre prédéterminé de répétitions et une nouvelle puissance idéale est calculée par incrémentation de la puissance du préambule émis en dernier lieu si la puissance du préambule émis en dernier lieu est comprise entre la puissance extrême minimale et la puissance idéale calculée.

7. Procédé selon l'une des revendications précédentes, dans lequel il est tenu compte des exigences de puissance d'une transmission de données faisant suite à la commande de la puissance pour réduire le nombre des répétitions de l'émission du préambule.

8. Dispositif de commande de la puissance, comportant
- un dispositif émetteur (SE) pour émettre un préambule,
- un dispositif récepteur (EE) pour recevoir un message de confirmation et
- un dispositif de commande (STE) pour commander la puissance du dispositif émetteur, lequel est aménagé de manière telle que
- un préambule avec une puissance de départ est émis,
- en l'absence d'un message de confirmation, une puissance idéale du préambule est calculée par incrémentation,
- un préambule avec la puissance idéale est émis par la station mobile si la puissance idéale se trouve dans une limite qui est décrite par une puissance extrême maximale et une puissance extrême minimale,
- le préambule avec la puissance extrême maximale est émis par la station mobile si la puissance idéale est supérieure à la puissance extrême maximale et
- le préambule avec une puissance comprise entre la puissance extrême minimale et la puissance idéale calculée est émis par la station mobile si la puissance idéale est inférieure à la puissance extrême minimale.

9. Procédé de commande de la puissance, dans lequel
- un préambule avec une puissance idéale calculée est émis, le préambule avec une puissance qui est comprise entre la puissance idéale calculée et une puissance minimale déterminée étant émis si la puissance idéale calculée est inférieure à la puissance minimale déterminée,
- un message d'accès (message RACH) est émis lorsqu'un message de confirmation est reçu,
- la puissance idéale est recalculée par incrémentation si aucun message de confirmation n'est reçu.
